# EUROPEAN PATENT APPLICATION

(11) **EP 1 972 486 A1**
(43) Date of publication of application: **24.09.2008**
(21) Application number: 07104438.2
(22) Date of filing: 19.03.2007
(51) Int. Cl.: B60L 15/20, B60L 15/10, G01C 19/00

(54) **Motorized wheelchair**

(71) Applicant: Invacare International Sàrl, 1196 Gland (CH)
(72) Inventor: Richey II, Joseph B., OH 44022 (US); Strothmann, Thomas, 49565, Bramsche (DE)
(74) Representative: Ganguillet, Cyril

(57) **Abstract**

The present invention relates to a motorized wheelchair and to a method for stabilizing a motorized wheelchair when driven. The wheelchair has improved stability due to an electronically controlled stability system. Accordingly, drift can be prevented by early detection of contradicting signals received from gyro-devices and motors of left and right motorized wheels. The improvements reported herein apply to all kinds of motorized wheelchairs, such as front-, mid-, or rear-wheel driven wheelchairs.

## Description

### Technical Field of the Invention

The invention relates to a motorized wheelchair, to a method of stabilizing a motorized wheelchair when driven, and to a drive control device for a vehicle, preferably for a wheelchair.

### Background Art and Problem to be Solved

Exemplary stability problems of motorized wheelchairs have been discussed in detail in US 6,202,773 and US 6,615,937 at the example of typical front- and rear-wheel driven wheelchairs. As can be seen from these references, on the one hand, rear-wheel driven wheelchairs are generally more stable than front-wheel driven wheelchairs, which allows for higher maximum speeds in the former. On the other hand, front-wheel driven wheelchairs generally have the advantage of better maneuverability, and allow a user to get closer to an object in front of the wheelchair user. In general terms, rear-wheel driven wheelchairs are considered to be advantageous for out-door use, where stability and high speed are important advantages, while front-wheel driven wheelchairs are the preferred vehicle for indoor use. It is one objective of the present invention to provide a wheelchair having increased stability features, and at the same time good maneuverability. In other words, it is an objective to provide a wheelchair having the advantages of a front-wheel driven wheelchair while being as stable as, but preferably more stable than, typical rear-wheel driven wheelchairs.

In certain circumstances, wheelchairs can experience stability problems such as tilting over, tipping and loss of traction, resulting in drift or skidding. Loss of traction can result from effecting a sharp curve while driving at high speed, for example. Furthermore, loss of traction may be observed when the surface is in some way slippery, for example, on a wet track, in case of glaze, or on sandy or dusty roads. A common risk following a loss of traction particularly associated with front wheel driven wheelchairs is a "spin-out" or "breakout", which causes the vehicle to suddenly and violently flip over from a forward into a reverse direction, or even to topple sideways. It is therefore an objective of providing a wheelchair in which the above stability problems are minimized, while at the same time allowing for higher speeds than would ordinarily be stable.

A typical stability problem more frequently encountered with front-wheel driven wheelchairs is "veering," that is, the deviation of the wheelchair from a desired direction as indicated by the wheelchair user. This problem may occur when driving along a slope. Rear wheel driven wheelchairs have a tendency of "veering" downwards instead of, for example, maintaining a straight path perpendicular to the slope; front wheel driven wheelchairs tend to veer upwards the slope. More generally, veering occurs when an additional force acts on the wheelchair and thus changes the route the user has indicated by the aid of his/her command input device. Wind blowing in a direction which is perpendicular to a wheelchair's driving direction may also be such a force, for example. In view of the above, it is an objective of the present invention to provide a more stable wheelchair, in which "veering" is much less likely to occur.

In US 6,202,773 and US 6,615,937, one and two gyroscopes, respectively, are provided in order to control the wheelchair, e.g., assess a difference between turn rate command and actual turn rate. Accordingly, inputs from the user's command input device and from the gyroscope are compared in order to determine if the wheelchair's actual course is different from the desired course. In case of a difference, the wheelchair's speed may be limited and/or the driving direction may be corrected. US 6,615,937 illustrates a system also including a second gyroscope used to detect failure of the gyroscope used to control the wheelchair, with the outputs of each gyroscope being compared to one another, and, in which system the failure of the first gyro device can be determined by a change in this comparison.

While the use of the gyroscope significantly increases the stability of a wheelchair, and thus allows for higher maximum speeds, there is still some room for improvement. One problem addressed in US 6,202,773 and US 6,615,937 is that the offset voltage associated with piezo ceramic rate-of-turn sensors is not only dependant on rate of turn, but may also vary with temperature. These patents teach a controller that attempts to correct for temperature offset in the gyroscope whenever wheelchair is at rest. Consequently, when rate-of-turn sensor case temperature significantly changes while the wheelchair is being driven, an offset voltage error would appear that would not be corrected by this controller until the next time the wheelchair is at rest. This may result in use of the wheelchair for an extended period of time with an offset voltage error in the rate-of-turn signal used to control the wheelchair. It is therefore an objective of the present invention to provide a constantly ongoing offset cancellation, which permanently and continuously corrects any offset error-signal originating from temperature, or at least to provide periodic offset cancellation at a high enough rate while the wheelchair is being driven to correct any offset error-signal originating from temperature prior to any effects on wheelchair stability or handling are sensed by the user.

In view of the above it is a general objective to improve the stability of existing motorized wheelchairs, in particular front-driven wheelchairs, while allowing for high speeds and maximum turn rates.

### Summary of the Invention

These objectives are advantageously achieved in accordance with the invention by a motorized wheelchair, by a method for stabilizing a motorized wheelchair when driven, and by a drive control device for a vehicle, in accordance with the appended claims.

An advantage of the present invention is that the wheelchair turn rate is limited at high speeds and the speed is limited at high turn rates. Both methods works in the way that threshold values, such as product (turn speed)x(velocity), are not exceeded. This helps assure that the wheelchair does not spin out as long as the surface is normal, without the help of a gyro system.

Another advantage of the present invention is that the drive control device improves the stabilization of the wheelchair before a spin-out is detected, in the form of a specific limitation to safe turn rates and velocities independently of the joystick commands, so that the gyro system preferably serves as a last instance when breakouts are imminent, not affecting the vehicle parameters during normal operation.

Further advantageous embodiments of the invention ensue from the additional dependent claims.

### Brief Description of the Drawings

The invention will be explained in greater detail in what follows by means of drawings. Shown are in:
**Fig. 1** a perspective view of a preferred embodiment of an exemplary motorized wheelchair according to the invention,
**Fig. 2** a schematic functional block diagram of an exemplary stability system for a wheelchair according to the invention,
**Fig. 3** a more detailed functional block diagram of an exemplary stability system for a wheelchair according to the invention;
**Fig. 4** a flowchart for an exemplary fast control loop of a system, generally illustrating the processing of turn rates and speed of the wheelchair,
**Fig. 5** a flowchart for an exemplary method, illustrating the processing of signals of a first rate-of-turn sensor,
**Fig. 6** a flowchart for an exemplary method, illustrating the processing of signals of a second rate-of-turn sensor,
**Fig. 7** a flowchart for an exemplary method, providing further details on the stability features related to the detection of drift as mentioned under no. 550 in fig. 5, and
**Fig. 8** a flowchart for an exemplary method, providing further details on the stability features of the wheelchair related to the correction of veering as mentioned under no. 690 in fig. 6.

### Detailed Description of the Preferred Embodiments

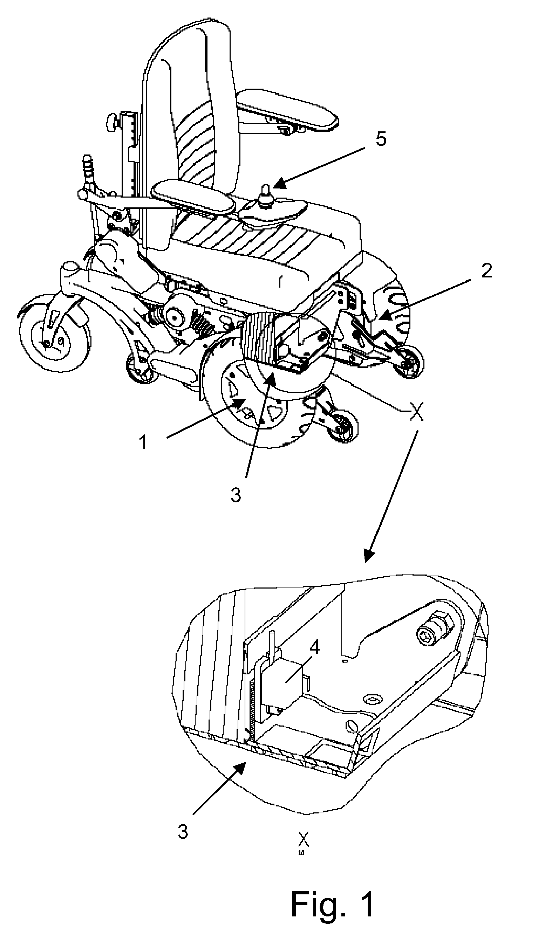

The disclosed invention may be implemented in many ways sharing common characteristics, since one can differentiate different routines or programs that altogether provide more stability. Fig. 1 shows an exemplary wheelchair comprising a left motor 1 and a right motor 2, preferably of the GB-type, a chassis 3, on which a gyro sensor module 4 is located and a remote joystick 5 as operator input device for the driving of the wheelchair. The term "gyro" is used herein as a synonym of the more general term "rate-of-turn sensor." The gyro as referred to herein does not need to be a specific gyroscope, but may be any sensor or combination of sensors that can be used to determine the actual rate-of-turn of the wheelchair chassis. References to a gyroscope *per se* will be made using the full term "gyroscope." Also, the terms "preferable" and "preferably" are used herein to indicate one optional configuration or characteristic, and in accordance with the ordinary meaning of that term does not indicate that that the configuration or characteristic is mandatory or the only possible configuration or characteristic.

Front and rear, left and right as well as bottom and top sides of the wheelchair are determined by a user seated in the wheelchair. It can be remarked from fig. 1 that the exemplary vehicle shown preferably is front wheel driven, with large left and right front wheels being arranged in front of swiveling castor wheels. In front wheel driven wheelchairs, the space in front of a user seated in the wheelchair is less encumbered, providing more freedom to move legs and to approach objects from the front of the wheelchair. In the wheelchair of the present invention, the comfort and other advantages of a less encumbered front part of the wheelchair is combined with a high degree of stability of the vehicle. As can be seen from fig. 1, the exemplary wheelchair comprises a pair of anti-tip idler wheels for avoiding tipping over. Of course, the teachings of this disclosure may be used to improve wheelchairs of different configurations, such as other front wheel drive wheelchairs, mid-wheel drive wheelchairs, and rear wheel drive wheelchairs. Additionally, this disclosure presents several features for improving stability of a wheelchair. Although a preferred embodiment is discussed herein as having all of these features for improving stability of a wheelchair, it is to be understood that many of these features may be used independently of each other, and it may be beneficial to add only one of these features (adding only required structure and corresponding functionality and methods) to a known wheelchair, such as to any of the wheelchairs taught in US 6,202,773 or US 6,615,937, which are hereby incorporated by reference, or a combination of any two of these features to a known wheelchair, such as to any of those taught in US 6,202,773 or US 6,615,937.

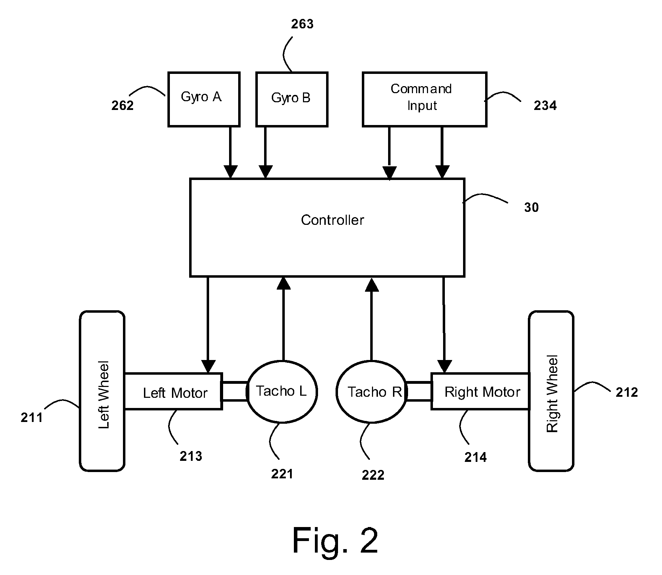

The block-diagram of fig. 2 shows at a relatively high level an exemplary electronically controlled, closed-loop stability system of the present invention that can be used to improve the stability of wheelchairs having motor-driven wheels. Accordingly, the wheelchair has a left side wheel 211, a right side wheel 212 with corresponding drive motors 213 and 214. The wheelchair of fig. 2 may also include one or more sensors to measure a parameter associated with the left side wheel 211 and/or the right side wheel 212 , e.g., a left side wheel speed sensor or tachometer 221 and/or a right side wheel speed sensor or tachometer 222. The sensor(s) deliver measured signals to a controller 30 connected to the drive motors 213, 214. The controller 30 is further fed with signals from a command input 234 and one gyro device or a plurality of gyro devices, such as two gyro devices 262 and 263 shown in fig. 2, which preferably work as a dual turn rate sensor as discussed herein. The controller 30 may include any one or any two or more of the following stability functions, any of which may be done in real time: (a) detection of, and perhaps compensation for, drift on the basis of drive wheel speed (using signals corresponding to a speed of the drive motors and/or drive wheels) in comparison with data provided from one or more gyros; (b) offset cancellation of temperature-induced error in a control gyro by using inputs from a plurality gyros oriented differently with respect to temperature-induced errors; and/or (c) detecting and correcting, optionally using an integration method, for "veering." Additionally, exemplary wheelchairs may include a combination of electronic and mechanical stability features, such as anti-tip idler wheels for avoiding tipping-over in combination with any one or any two or more of the electronic stability features discussed herein.

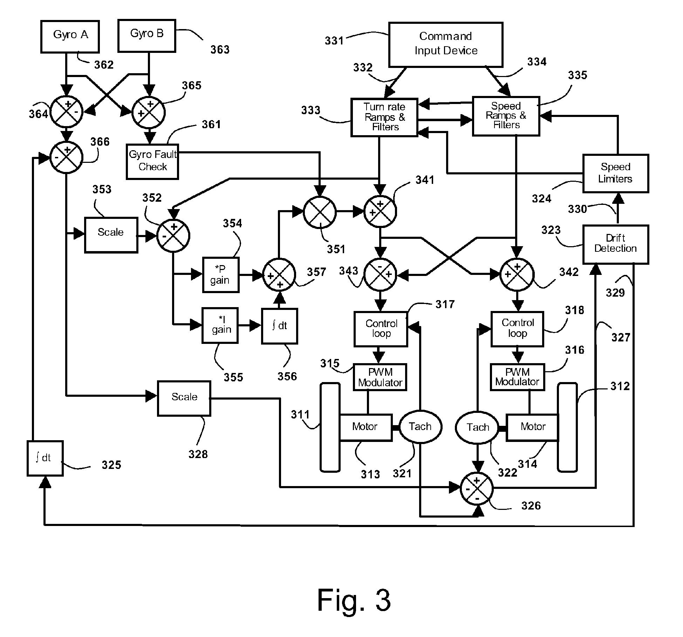

Fig. 3 is a more detailed, functional block diagram illustrating the functioning of exemplary stability features of the present invention that can be used to improve the stability of wheelchairs having motor-driven wheels. It is clear to the skilled person that fig. 3 illustrates the various functions necessary to accomplish the electronically controlled stability features. Fig. 3 is thus to be understood as a functional block diagram showing the origin of signals and the way they are processed. However, circuitry, such a processor (e.g., a central data processing unit), controlling said functions and signal processing is not shown in fig. 3.

With reference to fig. 3, the individual functional elements of the electronically controlled stability features of the wheelchair of the present invention are detailed. In fig. 3, arrows indicate the direction of signals, boxes generally indicate the generation or processing of signals and circles generally indicate units summing and/or subtracting signals, unless otherwise indicated. It is clear to the skilled person that referral to a box as a unit, such as "a drift detector 323" does not necessarily mean that the corresponding function is accomplished by a structural entity. It will be clear to the skilled person that the corresponding function may be accomplished by a suitable software feature, for example, or a combination of a structural entity and a software feature.

Fig. 3 shows an exemplary motor unit comprising two motor-driven wheels 311, 312 and two drive motors 313,314. Of course, the vehicle includes a power source, such as a battery, not shown in fig. 3. Preferably, the motors are of the alternating current type and need each a PWM modulator 315, 316 to modulate the DC delivered from the battery in accordance with an output signal of a control loop device 317, 318 respectively for each PWM modulator.

The exemplary drive control device according to the invention preferably comprises a speed sensor and/or tachometer unit arranged to separately measure the speed, e.g., the linear or angular velocity, of one or both drive motors (or one or both drive wheels) with which the vehicle is provided. Said speed sensor or tachometer unit may include, e.g., a left side speed sensor and/or tachometer 321 and a right side speed sensor and/or tachometer 322. The speed sensors or tachometers may be arranged to sense signals from the motors related to the turn speed of the respective motor. The signals of both the left and the right drive motors 313 and 314 (and/or signals corresponding to the speed of one or both drive wheels, e.g., the linear or angular velocity) can be used to derive a rate-of-turn as derived from the wheels. Preferably, the signals are generated by feedback sensors. Motors capable of producing a feedback signal corresponding to the rotational speed of the motor are known. For example, alternate current driven motors, for example brushless motors may be used. Alternatively, DC motors equipped with a tachogenerator (tachometer), a resolver or other suitable feedback mechanisms may be used. In this latter case, the tachogenerator produces a signal corresponding to the speed of the corresponding wheel.

The command of said control loop devices 317, 318 is achieved by a driver of the vehicle or an occupant of the wheelchair operating a command input device or control unit 331 which delivers a command turn rate signal 332 to a turn rate circuit 333 as well as a command speed/direction signal 334 to a speed circuit 335, wherein each of said circuits has an output connected to a respective of said two control loop devices 317, 318 via a node unit. The control unit 331 may include, for example, a joystick. Other types of input devices could also be used to control speed, direction (forward/reverse) and/or turning movements, for example, a "sip and puff" device or an operator head movement sensor. The elements 333 and 335 may be interconnected.

Said node unit comprises a first summing node 341, a second summing node 342 and a subtracting node 343. Said first summing node 341 has a first input connected to said output of the turn rate circuit 333 and a second input connected to the output of a multiplexer ("MUX") 351. The output of the first summing node 341 is connected to a subtracting input of the subtracting node 343 and to a first input of the second summing node 342, and the other inputs of said subtracting node 343 and said second summing node 342 are connected together to the output of said speed circuit 335.

The multiplexer 351 opens in response to a fault signal generated by box 361, if the signals from both gyros are sufficiently unrelated to each other so that they are no longer useful. The fault signal may be latched to prevent unintended switching between the functional and non-functional state. This mechanism is as such already known from US 6,615,937, and has the purpose of preventing the use of signals from the rate-of-turn sensors, if at least one of them turns out to be non-functional.

Besides multiplexer 351, said turn error correction unit comprises a subtracting node 352 having a subtracting input connected to the output of a scale block 353, a further input connected to the output of said turn rate circuit 333 and having an output connected to an error amplifier unit which consists of a P-gain block 354, an I-gain block 355, an integrator 356 and a summing node 357 whose output delivers a signal to a first input of said multiplexer 351 which has a second input connected to the output of a gyro fault check block 361 of a gyro unit, wherein said error amplifier unit forms a P, I or PI feedback control of turn rates, and said gyro unit has gyro devices which are sensors for sensing actual turn rates of the wheelchair. It should be noted that the integrative (I) part of the control loop amplifier as represented by I gain stage 355 and integrator 356 accumulates turn rate errors, which equals to a turn positioning, or "bearing" error.

The drive control device according to the invention includes said tachometer unit comprising besides said two tachometers 321, 322, a drift detector 323, a speed limiter 324, an integrator 325, a combining node 326 and a scale block 328. Said combining node 326 has two inverting inputs being connected one of them to said scale block 328 and the other to the left side tachometer 321, a summing input connected to the right side tachometer 322 and an output which delivers a signal 327 for said drift detector 323. Whereas said drift detector 323 can give a signal 329 for the integrator 325 and a signal 330 for the speed limiter 324, this speed limiter 324 delivers a control signal for the turn rate device 333 and a control signal for the speed control device 335.

Besides said gyro fault check block 361, the gyro unit includes two gyro devices 362, 363, a first subtracting node 364, a summing node 365 and a second subtracting node 366. The output of the gyro device 362 is connected to the summing inputs of said first subtracting node 364 and said summing node 365 together, and the output of the gyro 363 is connected to the inverting input of said first subtracting node 364 and to a summing input of said summing node 365 which delivers a signal to said gyro fault check block 361. A summing input of said second subtracting node 366 is fed with the output signal of said first subtracting node 364 and has an inverting input fed with an output signal from the integrator 325 of said drift detection unit 323. The scale block 353 of the turn error correction unit and the scale block 328 of the tachometer unit are both fed with the output signal from said second subtracting node 366 of said Gyro unit.

The control loops 317, 318 perform a fast standard routine according to the measured speeds of the wheels in order to maintain the wheel speeds as provided by summing nodes 342 and 343 within desired values. Certain differences between the wheel speeds cause the vehicle to turn at a specific rate, same wheel speeds cause the wheelchair to run in a straightforward direction. Turn rate circuit 333 and speed circuit 335 interact in a way that certain threshold values, such as SpeedProduct = (turn speed) x (velocity), are never exceeded. At high velocities a certain limit A is applied to the turn speed output of turn rate circuit 333, as defined by LimitA = SpeedProductA / velocity. At high turn rates a certain limit B is applied to the speed output of speed circuit 335, as defined by LimitB = SpeedProductB / turn speed. These routines do not require input from the gyro unit, unless a particular situation of drift is obtained, for which speed and turn rate limits must be set to absolute maximum permitted (ceiling) values. If no drift situation is recognized, Speed limiter 324 does not apply an own limit to the normal speeds as output by circuits 333 and 335.

A classical gyroscope comprises a flywheel capable of rotating about an axis passing through its center of gravity and generating a reaction on the bearings of the axis if there is a change of direction of the quite system, so the with the aid of a gyroscope a turn rates or turn accelerations of the system may be detected. Modern electrical gyro devices do no longer incorporate rotating parts like a flywheel, such as micromachined sensors, or piezoelectric devices which make use of the Coriolis force. The advantage of said gyro devices is that they can be used to detect a "drift" of a vehicle, i.e. whether the vehicle moves without a corresponding rotation of the wheels. For the purpose of the present invention, preferably electrical or electronic gyro devices may be used.

In the sense of the invention at least one of two separate routines involving the gyro devices may be used, one for reacting to drift and one for preventing veering. The first routine represents the worst case scenario, that is, when the wheels lose traction. Drift is then detected by comparing data from the drive motors (or drive wheels themselves) with data from the gyro devices. A deviation between those data means that there has been a loss of traction and the speed and the turn data of the wheels may have to be limited, and corresponding predetermined limiting values are set. The second routine is used for general stability in case of veering, for example when the vehicle moves in a direction which differs from a desired direction in an angle, even if this angle is small. This routine compares data from the command input device, e.g. from a joystick, with data from the gyro unit, and uses an integration method to bring the vehicle back to the desired track as indicated by the joystick.

Electronic gyro devices may be rather dependent on other parameters such as temperature. In order to overcome this shortcoming, the previously cited state of the art uses the method of periodical testing. In contrast, according to the present invention two gyro devices 362, 363 and nodes 364, 365 and 366 are used, so that two output signals are generated, one of the corresponding to a correct value v plus an error e and the other corresponding to -v + e. Subtracting both signals yields 2v and the error signal is eliminated. Thus one gyro device is mounted upside down in respect to the other one in order to deliver mirrored signals with opposite polarity. This cancels out most undesired dependencies, such as sensitivities against changes in temperature, in the supply voltage applied and the like, as long as the characteristics of the two gyro devices are the same.

Exemplary functions of the drive control device according to the present invention comprises three steps, any one or more of which may be used:
First step: Decelerate the chair and reduce the turn speed if the gyro turn rate differs too much from an assumed turn rate as derived from the wheel speeds.
Second step: Feed the motors, via a negative feedback and turn speed compensation, with the turn rate difference between the gyro signal and the above mentioned set turn rate. This can be treated as a proportional component which just responds to differences in turn speed.
Third step: The turn rate difference as mentioned in the second step is integrated before feeding it back as turn speed correction. This is achieved by the PI-type feedback control due to the difference integrator unit. However, it is also possible to use only the integrative part or 1-control.

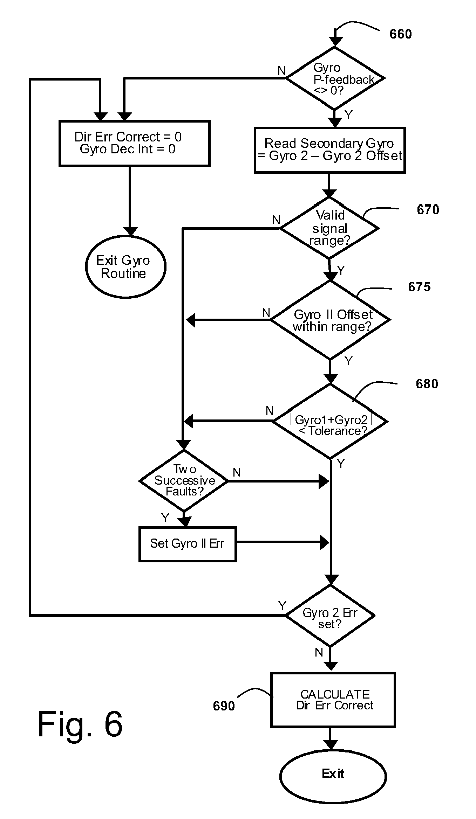

The stability features of the wheelchair are now exemplary illustrated with reference to figs 3-8.

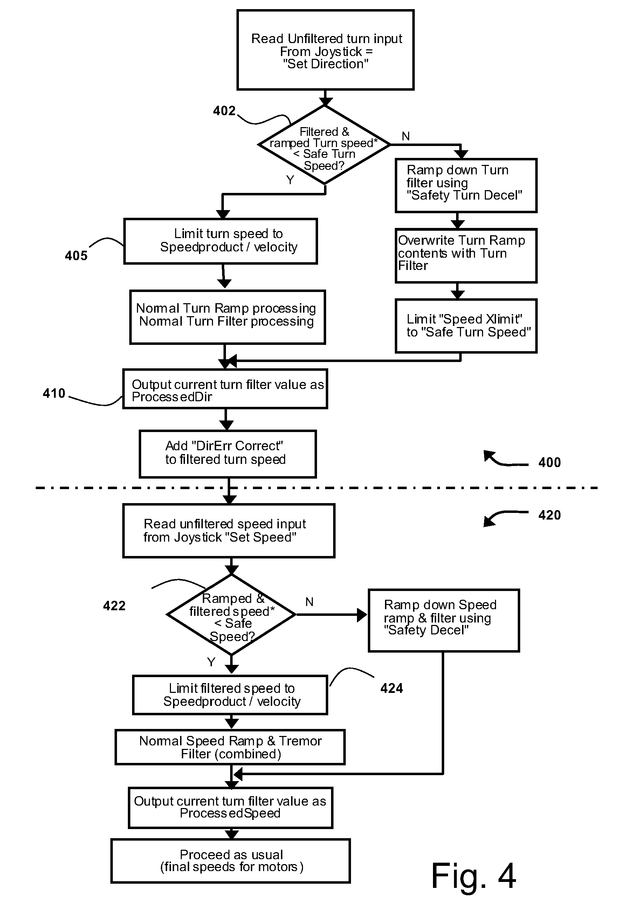

First, it is imagined that a wheelchair user uses the joystick 331 and commands full linear velocity. The according signal is detected in interrupt level of the central data processing unit (if an interrupt-driven processor embodiment is used) and is processed in box 335 of fig. 3 or as illustrated in the lower flowchart 420 of fig. 4. The signal passes through nodes 342 and 343 and is finally passed to the motors 313 and 314, which will drive at equal, maximum speed, and which provide a corresponding feedback signal via feedback sensors 321 and 322. A predetermined threshold value is not exceeded by the above-mentioned product (turn speed)x(velocity), because turn speed is zero. Accordingly, in box 424 in fig. 4, there will be no limitation of speed occurring and the wheelchair will drive at unlimited, maximum speed of both wheels.

If, while the wheelchair is being driven forward at maximum speed, the wheelchair user commands a sharp right curve, the signal is immediately received and processed in the upper part 400 of fig. 4. At box 405, it is checked if the turn command signal input by the user, in combination with the high linear velocity signal is admissible, and, if not, said turn command signal is modified in that the rate-of-turn signal is reduced to a lower commanded rate of turn, and the wheelchair turns, following less sharply curved track at the high linear velocity. In this way, the loss of traction and/or tilting and/or tipping over is prevented in advance, even though the user had commanded a turn signal that might have otherwise caused the wheelchair to lose traction or tilt or even tip over. As the linear velocity of the wheelchair decreases, if the user maintains the command to execute a sharp right curve, the controller will cause the wheelchair to execute a sharper turn, as the combination of the turn command signal and the linear velocity signal indicate that such a sharper turn may be executed without loss of traction and/or tilting and/or tipping over.

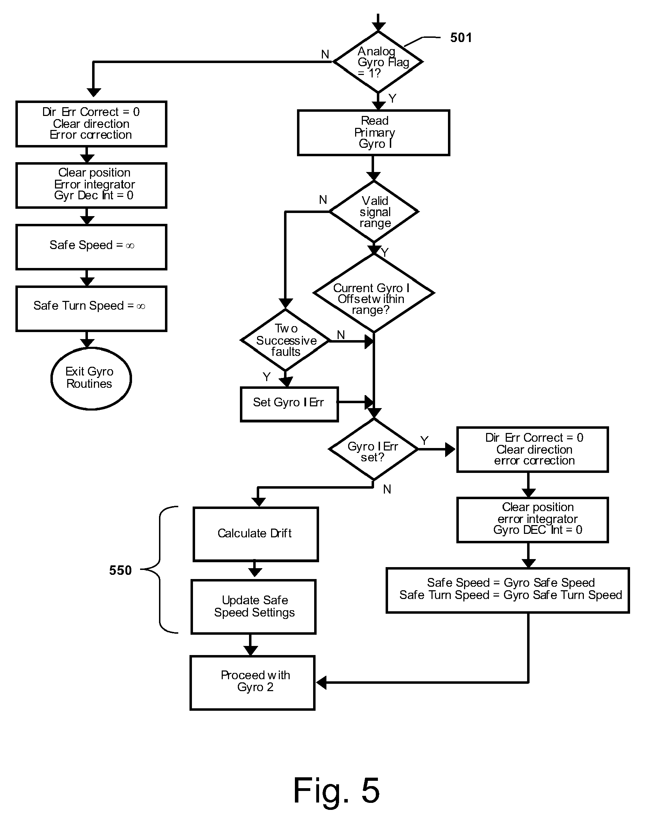

The processing of signals from the rate-of-turn sensors is illustrated with reference to fig. 3 and the flowcharts of figs. 4 - 8. Box 501 in Fig. 5 represents a global indication that a Gyro-system is present and that signals from the gyros are processed.

Accordingly, a first and a second rate-of-turn signals are created from the first and second rate-of-turn sensors 362 and 363, respectively. At node 364, the second signal is subtracted from the first for canceling any temperature-induced offset signal, as described above and the resulting signal is further used as the vehicle's real rate of turn.

The scaled, real rate-of turn signal and the rate of turn as derived from signals of the first and second feedback sensor 321 and 322 are summed as indicated at node 326 and the resulting signal is used for assessing the presence of low drift, as further processed in the form of signal 329, or high drift, as further processed in the form of signal 330 in fig. 3.

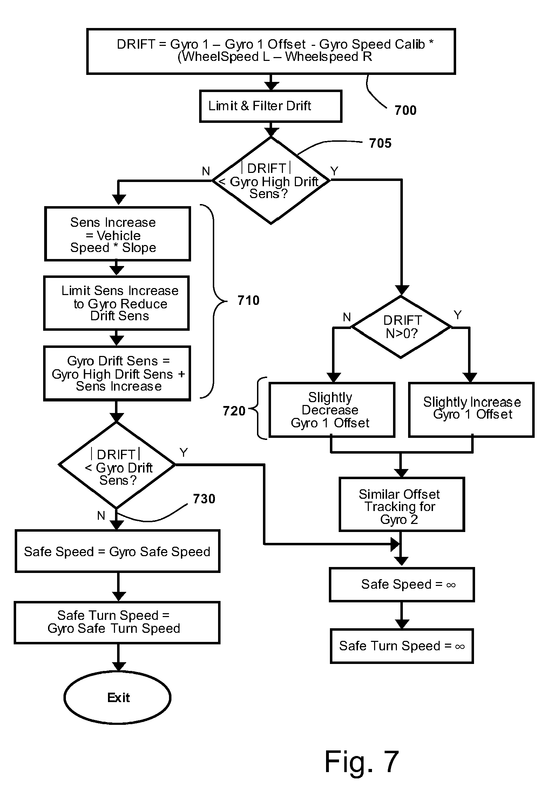

Box 700 in fig. 7 illustrates the drift value, wherein the variables "WheelSpeed L" and "WheelSpeed R" are determined from the signals received from the feedback sensors 321 and 322, respectively. At box 705 in fig. 7, detected drift is compared against a very low limit "Gyro High Drift Sens".

If the detected drift signal is very low, an according signal is produced as indicated with arrow 329, which signal is integrated over time (box 325 in fig. 3) and processed with the signal originating from node 364 at node 366, so as to provide for an signal offset error correction, also indicated on the right side following box 705 in fig. 7. This means, if the drift output is very small, a good wheel traction can be assumed. If the drift output exhibits an offset during this time, the integrator 325 will slowly adjust its output in order to neutralize this offset.

If drift is higher than this very low limit, this mechanism is skipped as to avoid offset shifts whenever traction is not nearly ideal. Boxes 710 in fig. 7 are followed instead, which have the purpose of decreasing the drift sensitivity of the routine at lower speeds of the vehicle. By adding the speed dependent term "Senslncrese", a second, higher limit "GyroDriftSens" is generated, which allows for a larger tolerance in the following comparison 730. If the high drift signal is confirmed at box 730, wheel traction is assumed to be bad, and vehicle spin out may be immanent. If such a situation is detected, values of maximum permitted (ceiling) speed and maximum permitted (ceiling) turn speed are set and the wheelchair is then allowed to drive at these absolutely maximum permitted (ceiling) speeds only, as indicated with the signal of arrow 330 in fig. 3. If the wheelchair velocity and / or turn speed is already slower than these absolute maximum speeds as determined by comparisons at boxes 402 and 422 in Fig. 4, the vehicle is already safe and no special action is taken; normal speed and / or turn ramp processing commences instead. If the wheelchair is running at higher speeds, it will be decelerated at a suitable rate until all speeds are within the permissible range.

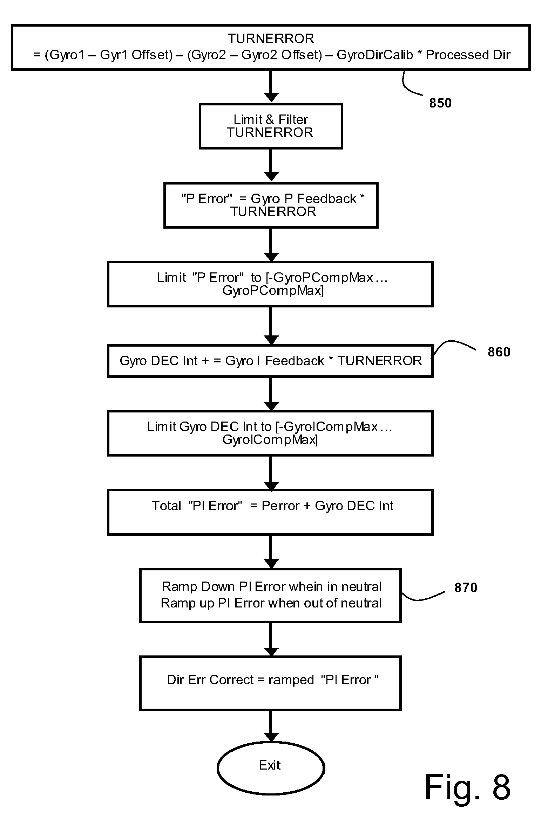

"Veering" is corrected by way of the routine illustrated in the flowchart of fig. 8, and boxes 353, 354, 355, 356 and 357 of fig. 3. Accordingly, the offset-cancelled rate-of-turn signal of the rate-of-turn sensors is scaled at 353 in fig. 3 and processed with the turn rate command signal at node 352. At boxes 355 and 356 in fig. 3, referring to box 860 in fig. 8, the difference between sensed rate-of-turn and commanded rate-of-turn is integrated over time, and the integrated signal is fed back at node 341 to the chain of signals feeding control loops 317 and 318 and finally motors 313 and 314 in fig. 3. In this way, an integrated signal is used to adjust the course of the wheelchair to a course corresponding to the input from the command input device. This technique allows correcting bearing errors by the use of rate-of-turn sensors, where angular position sensors would be required otherwise.

A few, particularly preferred embodiments of the present invention are provided herein below.

According to a preferred embodiment, the present invention provides a wheelchair comprising a control device in accordance with the present invention, wherein when loss of traction is detected, the wheelchair is decelerated and/or the turn rate reduced.

According to another embodiment of the wheelchair comprising the control device of the present invention, the control device includes a closed loop system which stabilizes the value of the bearing /orientation of the wheelchair.

According to still another embodiment of the wheelchair comprising the control device of the present invention, the control device includes a difference integrator unit.

According to another embodiment of the wheelchair comprising the control device of the present invention, the tachometer unit comprises an integrator 325 located between the output of a drift detector 323 and the input of a gyro unit.

According to preceding embodiment of the wheelchair comprising the control device of the present invention, the tachometer includes a speed limiter which delivers control signals to a turn rate circuit 333 and to a speed circuit 335, wherein each of said circuits has an output connected to a respective of two control loop devices 317, 318 via a node unit.

According to another embodiment, the wheelchair of the present invention comprises anti-tip wheels, preferably anti-tip idler-wheels, for avoiding tipping over.

According to another embodiment of the wheelchair comprising the control device of the present invention, the drive control device operates with normal ramps with maximal speed, so that if the input rate is too high it corrects the angular turn rate to threshold values, and vice-versa.

## Claims

1. A motorized wheelchair comprising:
a wheelchair chassis;
a motor-driven left wheel connected to and providing rolling support for said chassis;
a motor-driven right wheel connected to and providing rolling support for said chassis;
a castor assembly connected to and providing rolling support for said chassis;
at least one actual rate-of-turn sensor, arranged to generate signals related to the actual rates-of-turn of the wheelchair chassis;
a first feedback sensor (221) arranged to sense a signal from a motor (213) of said left motor-driven wheel and/or from said left motor-driven wheel (211), said signal being related to the speed of said right wheel;
a second feedback sensor (222) arranged to sense a signal from a motor (214) of said right motor-driven wheel (212) and/or from said right motor-driven wheel (212), said signal being related to the speed of said right wheel; and
a controller unit (30) receiving signals from said at least one actual rate-of-turn sensor (262) and from said first and second feedback sensors (221, 222), said control unit being arranged to detect drift and/or loss of traction of said motor-driven left and right wheels by processing and/or comparing said signals of said rate of turn sensor (262) with said first and second signals from said feedback sensors (221, 222).

2. The wheelchair of claim 1, wherein the controller unit (30) is arranged to generate output control signals that regulate the rotational speeds of each of said motor-driven left and right wheels in response to a detection of drift and/or loss of traction.

3. The wheelchair of claim 1, further comprising an input command device arranged to generate wheelchair turn command signals and wheelchair linear velocity command signals in response to wheelchair operator manipulation.

4. The wheelchair of claim 3, wherein the controller unit prevents drift and/or loss of traction by down-regulating said rate-of-turn command signal if a predetermined threshold value for a linear velocity command signal is trespassed and/or by down-regulating a linear velocity command signal when a predetermined threshold value for a rate-of-turn command signal is trespassed.

5. The wheelchair of claim 3, wherein the controller unit prevents drift and/or loss of traction (or stabilizes the wheelchair) by limiting and/or reducing a rate-of-turn command signal and/or a linear velocity command signal if the product of a first and a second value exceeds a predetermined threshold value, the first value representing a rate-of-turn corresponding to the rate-of-turn command signal and the second value representing a linear velocity corresponding to the linear velocity command signal.

6. The wheelchair of claim 3, wherein the rate-of-turn command signal and the linear velocity command signal are input command signals representing a desired rate-of-turn and a desired linear velocity and wherein the controller unit regulates said input signals so that a predetermined threshold value related to the product of an actual rate-of-turn and an actual linear velocity is not trespassed.

7. The wheelchair of any one of claims 4-6 wherein the predetermined values are determined in real time using measured values.

8. The wheelchair of any one of claims 4-6 wherein the predetermined values are determined using measured values taken at a prior instance of drift and/or loss of traction.

9. The wheelchair of any one of claims 4-6 wherein the predetermined values are pre-set maximum values.

10. A motorized wheelchair comprising:
a wheelchair chassis;
a motor-driven left wheel connected to and providing rolling support for said chassis;
a motor-driven right wheel connected to and providing rolling support for said chassis;
a castor assembly connected to and providing rolling support for said chassis; and
a first actual rate-of-turn sensor (262) and a second actual rate-of-turn sensor (263), arranged and/or mounted so as to generate a first rate-of-turn signal and an second rate-of-turn signal having a sign opposite to that of the first rate-of-turn sensor, and wherein a first and a second offset error signal of said first and second rate-of-turn sensors, respectively, is continuously and/or routinely cancelled by subtracting said second rate-of-turn signal from said first rate-of-turn signal so as to generate an offset-cancelled rate-of-turn signal.

11. A motorized wheelchair comprising:
a wheelchair chassis;
a motor-driven left wheel connected to and providing rolling support for said chassis;
a motor-driven right wheel connected to and providing rolling support for said chassis;
a castor assembly connected to and providing rolling support for said chassis;
at least one actual rate-of-turn sensor, arranged to generate actual rate-of-turn signals of the wheelchair chassis;
an input command device (331) arranged to generate wheelchair turn command signals and wheelchair linear velocity command signals in response to wheelchair operator manipulation; and
a controller unit (30) processing said actual rate-of-turn signals and said turn command signals, said controller determining, from said signals, an error value related to the difference between a desired rate-of-turn derived from said turn command signal and an actual rate-of-turn derived from said actual rate-of turn signal, said controller integrating said error value over time, thus creating an integrated error value, and said controller using said integrated error value for regulating the rotational speeds of at least one of said left and right motor-driven wheels.

12. The wheelchair of any of the preceding claims, wherein the motors of the left and right wheels are alternate current (AC) motors.

13. The wheelchair of any of the preceding claims, wherein the motors of the right and left motor-driven wheels have internal and/or external speed and/or position sensors.

14. The wheelchair of any of the preceding claims, said wheelchair having motor-driven left and right front wheels and at least one rear castor wheel.

15. The wheelchair of any of the preceding claims, said wheelchair comprising a pair of anti-tip idler wheels, arranged to prevent forward tipping of the wheelchair.

16. A method of stabilizing a motorized wheelchair having separately controlled, motor-driven left and right wheels that provide rolling support to the wheelchair, the method comprising the steps of:
- sensing a signal related to the speed of said motor-driven left wheel;
- sensing a signal related to the speed of said motor-driven right wheel;
- sensing a signal related to the actual rate-of-turn of the motorized wheelchair generated by a rate-of-turn sensor;
- detecting, by comparison of the signals related to the speed of the wheels and the signal related to the actual rate-of-turn, if there is drift and/or loss of traction occurring; and
- if drift and/or loss of traction is detected: regulating the speed of at least one of said motor-driven wheels.

17. The method of claim 16, wherein said signals related to the speed of said motor-driven left and right wheels are processed to a second rate-of-turn signal derived from the motors.

18. The method of claim 16, further comprising the step of:
- detecting, by processing the signals related to the speed of the wheels and the signal related to the actual rate-of-turn, an error signal being part of the actual rate-of-turn-signal; and,
- adjusting the rate-of-turn signal by processing it with a signal related to said error signal.

19. The method of claim 18, wherein the presence of an error signal is detected when a difference between the signal related to the actual rate-of-turn and the signal related to the speed of the wheels is below a predetermined, first threshold value.

20. The method of claim 16, wherein drift and/or loss of traction is detected when a difference between the signal related to the actual rate-of-turn and the signal related to the speed of the wheels is above a predetermined, second threshold value.

21. The method of claim 16, wherein the signal related to the speed of the left wheel and the signal related to the speed of the right wheel are feedback signals from the left and right motors of the left and right wheels, respectively.

22. The method of claim 16, wherein the signals related to the speed of a wheel are signals related to the revolutions per time of the respective motor of said left and right wheel.

23. The method of claim 16, wherein the signals related to the speed of a wheel are signals related to the revolutions per time of the respective left and right wheel.

24. Drive control device for a vehicle, preferably for a wheelchair comprising a motor-driven left side wheel (211) and a motor-driven right side wheel (212), wherein said control device includes a controller (30), a command input (234) and at least one rate-of-turn sensor, which is connected to said controller (30), and wherein said rate-of-turn sensor device is provided for sensing actual turn rates of the vehicle, wherein a sensor (221) of a motor (213) of said left wheel (213) is arranged to provide a signal related to the speed of the motor-driven left wheel, and wherein a sensor (222) of a motor (214) of said right wheel (212) is arranged to provide a signal related to the speed of the motor-driven right wheel, wherein the controller (30) is arranged to detect drift and/or loss of traction of the wheels by processing the actual rate-of-turn signal from the rate-of-turn sensor with the signals of the sensors (221, 222) of the motors (213, 214) of the motor-driven left and right wheel (211, 212), respectively.

25. The device of claim 24, wherein the sensors (221, 222) of the motors (213, 214) of the motor-driven left and right wheel (211, 212) are, respectively, left and right tachometers or position feedback sensors (221, 222).

26. The device of claim 24, comprising a rate-of-turn sensor unit including two rate-of-turn sensors, which are fixed in such manner as to produce inverse signals in order to correct temperature induced errors.

27. Device of any of claims 24 - 27, including a difference integrator unit (354, 355, 356, 357) fed with a signal from the output of a turn rate circuit (333), wherein said difference integrator comprises a P-gain block (354), an I-gain block (355), an integrator (356) delivering a signal operating together with an output signal from a gyro device or a gyro unit, in order to integrate a turn rate difference signal before feeding it back as a turn speed correction.
